# FASCICULE DE BREVET EUROPEEN

(11) **EP 3 564 075 B1**
(45) Date de publication et mention de la délivrance du brevet: **12.08.2020**
(21) Numéro de dépôt: 19170357.8
(22) Date de dépôt: 19.04.2019
(51) Int. Cl.: B60R 19/48, B62D 41/00

(54) **PARE-CHOCS A CELLULE DE MARQUAGE INTEGRÉE**
STOSSFÄNGER MIT INTEGRIERTER MARKIERUNGSZELLE
BUMPER WITH INTEGRATED MARKING CELL

(30) Priorité: 04.05.2018 FR 1853847
(43) Date de publication de la demande: 06.11.2019
(73) Titulaire: Airbus (S.A.S.), 31700 Blagnac (FR)
(72) Inventeur: FERRER, Guillaume, 31707 BLAGNAC Cedex (FR); CHARLES, Julien, 31707 BLAGNAC Cedex (FR)
(74) Mandataire: Gicquel, Olivier Yves Gérard

(56) Documents cités:
- WO-A1-00/51875
- GB-A- 1 218 046
- JP-A- H0 280 467
- US-A- 2 646 016
- US-A1- 2013 197 717

## Description

La présente invention concerne le domaine des pare-chocs et plus particulièrement des pare-chocs de véhicules. La présente invention s'intéresse plus particulièrement aux pare-chocs intégrant un système permettant de révéler un impact du véhicule sur une surface quelconque.

### DOMAINE TECHNIQUE

Des collisions peuvent survenir entre un véhicule de type équipement de support au sol (en terme anglo-saxons GSE - Ground Service Equipement) et un aéronef. Or certains aéronefs peuvent présenter des zones pour lesquelles un tel impact a une incidence sur la structure, comme par exemple celle du fuselage, sans que cela puisse être détecté à l'œil nu.

La présente invention a pour but de proposer un pare-chocs de véhicule muni d'un système de marquage en cas de collision permettant un remplacement aisé et rapide du système en cas d'activation du marquage. Le document US 2013/0197717 A1 décrit un pare-chocs de véhicule couvert d'un revêtement en caoutchouc et comportant une cellule de fluide de marquage.

### EXPOSE DE l'INVENTION

Pour ce faire, la présente invention propose un pare-chocs de véhicule présentant les caractéristiques de la revendication 1.

De cette manière, il suffit de remplacer le pare-chocs pour remettre en fonction le véhicule ce qui est rapide et facile.

Le pare-chocs présente au moins l'une des caractéristiques optionnelles suivantes, prises isolément ou en combinaison.

Les moyens de fermeture se présentent sous la forme de deux lèvres élastiques superposées l'une à l'autre et bloquées en position contrainte en butée l'une contre l'autre, une pression appliquée sur le pare-chocs au niveau des lèvres d'une intensité minimum déterminée assurant le déblocage permettant aux lèvres de retrouver une position naturelle dans laquelle l'ouverture de la cellule vers l'extérieur est libérée.

Les moyens de fermeture se présentent sous la forme d'un lien sécable rapporté assurant la fermeture de la cellule, une pression appliquée sur le lien d'une intensité minimum déterminée conduisant à sa rupture et à la libération de l'ouverture de la cellule vers l'extérieur.

Les cellules sont réparties de manière transversale sur au moins une partie de la largeur du pare-chocs.

Pour au moins une partie des cellules, chaque cellule s'étend transversalement sur au moins une partie de la largeur du pare-chocs.

Les cellules s'étendant transversalement sont de forme globalement cylindrique.

Des cellules sont positionnées à plusieurs niveaux en hauteur.

Le pare-chocs comprend une partie non élastique structurelle fixée à la partie élastique et comprenant les moyens de fixation audit véhicule.

La présente invention concerne également le véhicule muni d'un pare-chocs présentant au moins l'une des caractéristiques optionnelles présentées ci-dessus, prises isolément ou en combinaison, la partie élastique étant positionnée au moins partiellement en partie périphérique externe.

La présente invention concerne également un procédé de marquage d'une surface avec laquelle un véhicule présentant au moins l'une des caractéristiques optionnelles présentées ci-dessus, prises isolément ou en combinaison, entre en collision et tel que lors du choc, la partie frontale du pare-chocs exerce une pression sur la ou lesdites cellules permettant l'écoulement du fluide de marquage au travers de la ou des ouvertures libérées vers l'extérieur.

### DESCRIPTION SOMMAIRE DES DESSINS

D'autres buts, avantages et caractéristiques de l'invention apparaîtront à la lecture de la description qui va suivre, description donnée à titre d'exemple non limitatif en référence aux dessins ci-annexés dans lesquels :
- Les figures 1 à 3 représentent des vues schématiques simplifiées en section longitudinale verticale d'un véhicule de support au sol respectivement se rapprochant d'un fuselage d'aéronef, en collision avec ce dernier, s'éloignant dudit fuselage après collision et muni d'un pare-chocs selon la présente invention ;
- la figure 4 représente une vue schématique simplifiée en section longitudinale verticale de la partie élastique du pare-chocs selon la forme de réalisation des figures 1 à 3 dans laquelle seules deux cellules sont représentées en position fermée, soit avant toute collision ainsi qu'une vue agrandie d'une cellule ;
- les figures 5 et 6 représentent des vues schématiques simplifiées en section longitudinale verticale d'une cellule de la partie élastique respectivement lors d'une collision avec un fuselage d'aéronef et après collision avec le dit fuselage ;
- la figure 7 représente une vue schématique simplifiée partielle en section longitudinale verticale de la partie élastique d'un pare-chocs au niveau d'une cellule de fluide de marquage selon une autre forme de réalisation ;
- la figure 8 représente une vue schématique simplifiée en section longitudinale verticale de la partie élastique du pare-chocs selon la figure 4 ;
- la figure 9 représente une vue schématique simplifiée en coupe selon l'axe A-A de la partie élastique du pare-chocs selon la figure 8.

### MANIERE DE REALISER L'INVENTION

Le véhicule 2 donné à titre illustratif dans la description qui suit est un véhicule de type équipement de support au sol. Un tel véhicule peut être par exemple un véhicule de tractage pour le déplacement de l'aéronef au sol, un véhicule de transport d'un tapis à bagages, un véhicule de transport de bagages ou de conteneurs à bagages, de fret, de passagers, du personnel aéroportuaire ou des compagnies, un camion-citerne pour l'approvisionnement de l'aéronef en eau, en fuel ou autre, un véhicule de restauration pour le chargement et déchargement des trolleys par exemple, un véhicule de ravitaillement en eau potable ou autre, un véhicule vide-toilettes, un véhicule de transport de l'escalier d'embarquement/débarquement passagers ... La présente invention peut concerner tout autre type de véhicule.

Dans la description, le terme « transversal » s'entend dans le sens de la largeur du véhicule, le terme « longitudinal » s'entend d'une direction perpendiculaire à la direction transversale à savoir dans le sens de la longueur du véhicule. La direction perpendiculaire à la direction à la fois transversale et longitudinale est désignée par l'expression « en hauteur » et correspond à la direction verticale.

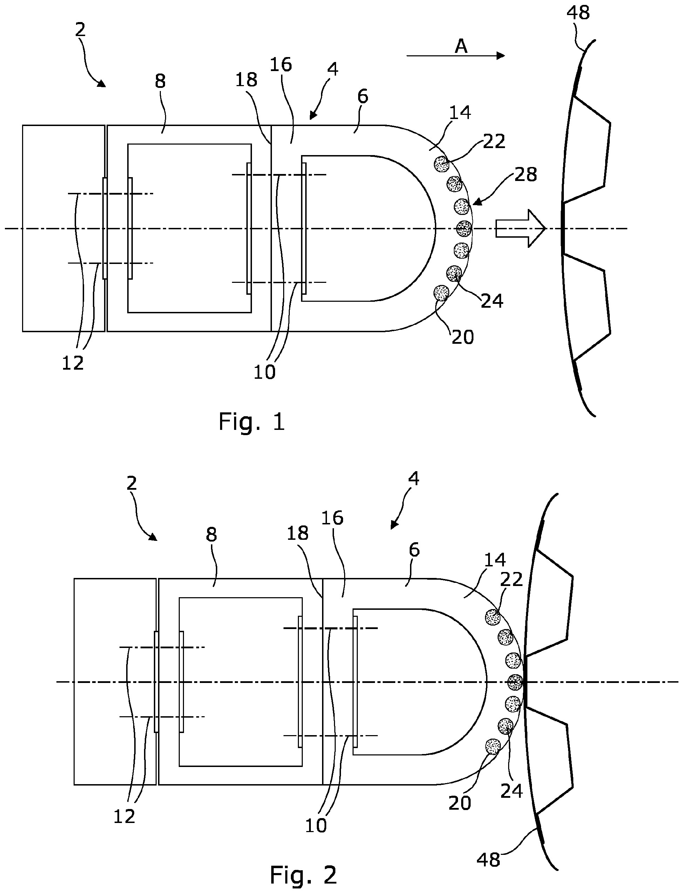

Les termes « avant » et « arrière » sont à considérer par rapport à la direction d'avancement du véhicule, cette direction étant représentée par une flèche A sur la figure 1.

Selon la forme de réalisation illustrée sur les figures 1 à 3, le véhicule 2 comprend un pare-chocs 4 présentant au moins une partie 6 élastique. Il comprend également une partie 8 non élastique constituant une ossature structurelle qui participe à la rigidité et à la transmission des efforts et à laquelle la partie 6 élastique est fixée par tout type de moyen. La partie 8 non élastique sera appelée dans ce qui suit partie structurelle. La partie 6 élastique est positionnée au moins partiellement en partie périphérique externe au niveau du pare-chocs. Dit autrement, la partie 6 élastique est positionnée longitudinalement au moins partiellement au niveau extrémal externe du pare-chocs. Dans la forme de réalisation illustrée, des traits pointillés symbolisent une jonction par vis de type classique ; tout autre type de fixation peut être utilisé. Dans la forme de réalisation illustrée, la fixation de la partie 6 élastique à la partie 8 structurelle est démontable. La partie 6 élastique peut être séparée aisément de la partie 8 structurelle sans endommager celle-ci et retirée du véhicule 2. Dans le cas présent, il s'agit d'une jonction 10 par vis et il suffit donc d'effectuer un dévissage simple pour séparer la partie élastique du véhicule 2. De la même façon, comme le montrent les figures 1 à 3, la partie 8 structurelle est elle-même fixée par tout type de moyen à la carrosserie du véhicule 2 et par exemple de la même façon que pour la partie 6 élastique ; des traits pointillés symbolisent une jonction 12 par vis de type classique permettant le démontage facile de la partie 8 structurelle avec ou sans la partie 6 élastique suivant qu'elle ait été elle-même démontée ou non.

La partie 6 élastique du pare-chocs 4 a pour fonction d'amortir les impacts frontaux par sa déformation élastique le temps de la sollicitation ; si le choc n'a pas été trop violent, il reprend ensuite sa forme et sa dimension initiale en ayant empêché d'endommager le véhicule.

A titre illustratif, la partie 8 structurelle peut être métallique et la partie 6 élastique peut être constituée par un matériau de type caoutchouc.

Selon une autre forme de réalisation, le pare-chocs 4 présente une partie 6 élastique mais aucune partie non élastique. La partie 6 élastique est directement fixée à la carrosserie du véhicule 2. La carrosserie du véhicule constitue alors la partie 8 structurelle.

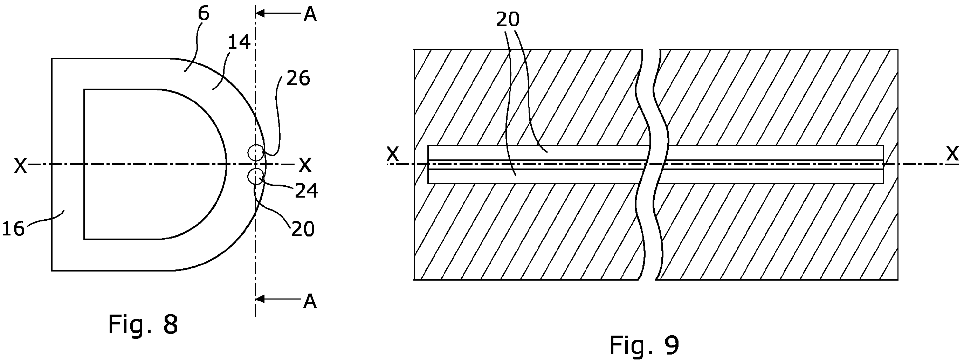

Les figures 1 à 3 représentent des sections longitudinales du véhicule 2 selon un plan X-X (représenté sur les figures 8 et 9) vertical central au véhicule. Dans toute la suite de la description, on considère que le véhicule 2 repose sur un sol horizontal et que toute direction perpendiculaire au sol est verticale. De façon classique, le pare-chocs 4 s'étend transversalement à l'avant du véhicule 2 sur la majorité de la largeur de celui-ci voire au-delà en présentant des courbures de part et d'autre du véhicule pour suivre ses contours.

Comme le montrent les figures 1 à 4 et 8, la partie 6 élastique présente une forme bombée creuse. Selon une autre forme de réalisation, elle pourrait être pleine. La partie 6 élastique présente une portion frontale 14 courbe de section convexe. Dans la forme illustrée, elle présente également une portion arrière 16, appelée base, plane. La partie 6 élastique présente une section en D ; la base 16 forme la barre du D et est destinée à s'appliquer contre une surface 18 plane de la partie 8 structurelle pour s'y fixer. La portion frontale 14 de la partie 6 élastique intègre au moins une cellule 20 de fluide 22 de marquage. La cellule 20 présente tout type de forme permettant d'offrir une cavité 24 de stockage du fluide de marquage. Selon une forme de réalisation, la portion frontale 14 de la partie 6 élastique présente plusieurs cellules 20 s'étendant transversalement sur la largeur du pare-chocs dans la direction transversale. Elles s'étendent par exemple sur plus de 50% de la largeur du pare-chocs voire même sur plus de 80% de la largeur du pare-chocs (comme visible dans l'exemple représenté sur la figure 9). Les cellules sont de forme globalement cylindrique de section circulaire d'axe dans la direction transversale le long du pare-chocs. Les cellules pourraient présenter tout autre type de forme et par exemple une section ovale ou équivalente ou encore tout autre type de forme et par exemple sphérique ou autre.

Les cellules 20 sont réparties sur une zone étendue en hauteur parallèlement les unes aux autres comme le révèle la coupe A-A sur la figure 9. Elles sont concentrées dans la partie extrémale avant de la portion frontale 14. Sur un même axe longitudinal, une seule cellule 20 est prévue. En effet, la cellule 20 présente une ouverture vers l'extérieur : aussi du fait de cette ouverture vers l'extérieur, il ne peut être prévu un ensemble de cellules plus en recul longitudinalement, appelées cellules de deuxième niveau, sauf à prévoir une liaison avec les cellules communiquant avec l'extérieur appelées alors cellules de premier niveau ou encore un canal permettant à la cellule de deuxième niveau se trouvant dans l'épaisseur de la partie élastique de communiquer avec l'extérieur. Comme le montrent les figures 1 à 4 et 8 et 9, des cellules 20 sont positionnées les unes à côté des autres dans le sens de la hauteur de manière à ce qu'un espace subsiste entre elles. Dans la forme illustrée, elles sont réparties de manière symétrique par rapport à un plan horizontal central X-X (figures 8 et 9). Elles s'étendent en hauteur sur une partie au moins de l'étendue de la surface courbe de la portion frontale 14. Dans la forme illustrée sur la figure 1, elles s'étendent sur plus de la moitié en hauteur de l'étendue de la surface courbe de la portion frontale 14.

Comme le montre la figure 9, et en particulier la coupe A-A, du fait de la forme cylindrique, les cellules 20 s'étendent dans le sens transversal sur plus de la moitié de la largeur de la partie élastique et dans le cas illustré, sur plus de 80% de la largeur de la partie élastique. Selon une forme de réalisation, dans le cas où la partie élastique dispose de trois branches, l'une destinée à être placée à l'avant du véhicule et les deux autres au niveau latéral de part et d'autre de la branche dite centrale, les extrémités transversales de la cellule 20 se situent uniquement sur la branche centrale de la partie élastique. Selon d'autres formes de réalisation, les cellules peuvent s'étendre jusque dans les branches latérales ; les extrémités transversales de la cellule se situent alors sur les branches latérales

Une partie au moins des cellules 20 voire la globalité comme dans l'exemple illustré ont une ouverture 26 directe vers l'extérieur. Le terme « direct » signifie que l'intérieur de la cellule est mis en communication avec l'extérieur par une simple ouverture 26 dans l'enveloppe de la cellule. Les cellules 20 ne sont donc ni intégrées complètement à l'intérieur de la partie élastique ce qui nécessiterait un impact très important pour permettre au fluide d'être libéré des cellules ni complètement extérieures à celle-ci ce qui les placerait en contact direct avec l'environnement extérieur et les exposerait à tout type d'agressions (frottement, coup par inadvertance ...) pour lequel il n'est pas par exemple souhaité que le fluide soit déversé.

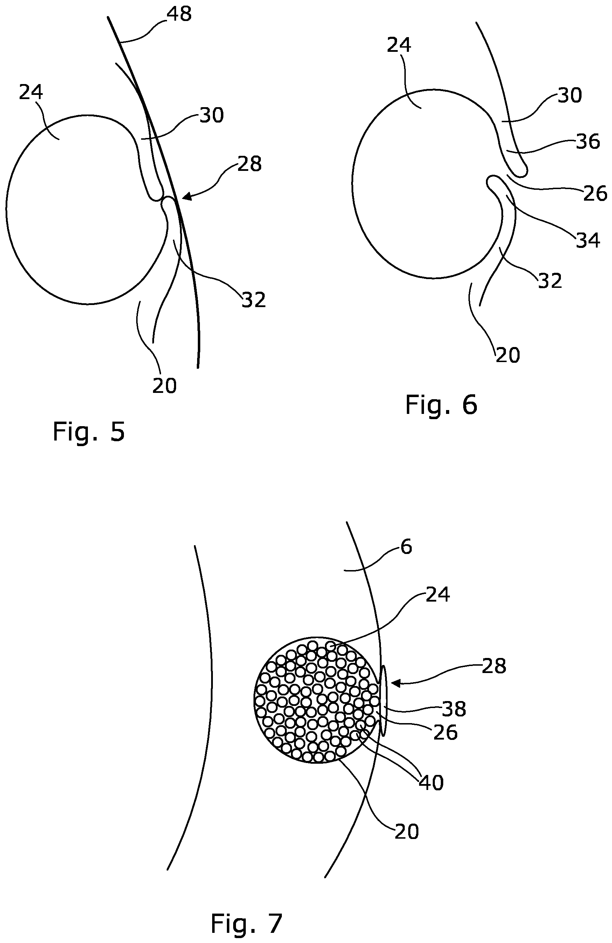

Dans la forme particulière de réalisation en vue agrandie en section sur la figure 6, l'ouverture 26 de la cellule 20 vers l'extérieur est directe. L'ouverture 26 est fermée par des moyens 28 de fermeture susceptibles sous l'effet d'une pression appliquée sur lesdits moyens de libérer l'ouverture offrant au fluide de marquage un accès à l'extérieur de la cellule au travers de laquelle il peut s'écouler.

De nombreux moyens 28 de fermeture de la cellule sont envisageables dont des exemples sont présentés ci-dessous.

Selon la forme illustrée sur les figures 1 à 6, 8 et 9, les moyens 28 de fermeture sont intégrés à la partie 6 élastique. La cellule 20 étant ouverte vers l'extérieur, deux lèvres 30, 32 sont formées respectivement de part et d'autre de l'ouverture 26, une lèvre 30 supérieure et une lèvre 32 inférieure. En position naturelle représentée sur la figure 6, les lèvres 30, 32 sont distantes l'une de l'autre pour former ladite ouverture 26 vers l'extérieur. Les lèvres 30, 32 présentent respectivement pour l'une une courbure 34 infléchissant la lèvre concernée vers l'intérieur de la cellule et pour l'autre une courbure 36 infléchissant la lèvre concernée vers l'extérieur. Les lèvres 32 inférieure et 30 supérieure sont superposées à distance l'une par rapport à l'autre. Dans l'exemple illustré, la lèvre 32 inférieure est courbée vers l'intérieur et la lèvre 30 supérieure est courbée vers l'extérieur.

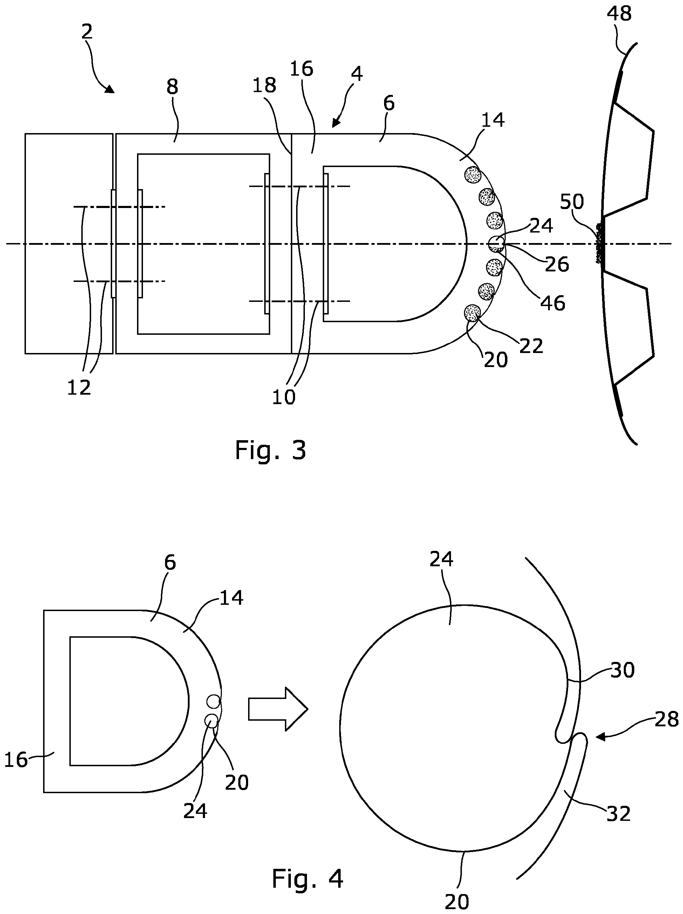

Lorsque les cellules sont fermées, la lèvre 30 de courbure vers l'extérieur est placée à l'intérieur de la lèvre 32 de courbure vers l'intérieur comme montré par la figure 4. Les lèvres 30, 32 sont alors en contact ; les lèvres cherchant à reprendre leur position naturelle, elles sont en appui l'une contre l'autre, en butée l'une contre l'autre. La lèvre 30 infléchie vers l'intérieur cherche à se déplacer vers l'extérieur et la lèvre 32 infléchie vers l'extérieur cherche à se déplacer vers l'intérieur. Les lèvres sont contraintes en position de fermeture bloquées l'une par l'autre fermant ainsi l'ouverture 26 et la cavité 24.

Il est nécessaire comme représenté sur la figure 5 d'appliquer une pression d'intensité minimum déterminée sur la surface extérieure de la partie élastique au niveau des lèvres 30, 32 pour libérer les lèvres et leur permettre par élasticité de recouvrer leur position naturelle dans laquelle l'ouverture 26 de la cellule vers l'extérieur est libérée.

Selon une autre forme de réalisation possible illustrée sur la figure 7, les moyens 28 de fermeture ne sont pas partie intégrante de la partie élastique et comprennent un lien 38 sous tout type de forme, bande, pastille ou autre liant les extrémités de la cellule au niveau de l'ouverture 26. Le lien 38 est réalisé dans un matériau différent qui n'a pas besoin d'être élastique et qui est donc choisi de manière appropriée pour être sécable. Lorsqu'une pression d'intensité minimum déterminée est appliquée sur la partie élastique au niveau du lien 38, il rompt et libère l'ouverture 26.

Toute autre forme de réalisation des moyens 28 de fermeture est possible comme par exemple de type escamotables, repliables ...

Le fluide 22 de marquage est constitué de tout type de fluide permettant de laisser une trace sur la surface de laquelle il est déversé. La cellule 20 présente une forme et le fluide une viscosité telles que le fluide 22 est au moins partiellement évacué de la cellule lorsque l'ouverture 26 est libérée. Comme le montre la figure 3, un résidu 46 peut subsister dans le fond de la cellule.

Alternativement, comme le montre la figure 7, le fluide 22 peut être contenu dans des billes 40 logées à l'intérieur de la cellule 20. Quelle que soit le mode de réalisation des cellules, les billes rompent sous ladite pression déterminée.

Le fluide 22 de marquage est de préférence lavable de manière à pouvoir être retiré ensuite de la surface sur laquelle il est déversé, une fois l'impact détecté, visualisé et traité. Le véhicule impacté peut ainsi si la collision n'a pas entrainé de dégât être aussitôt remis en service.

Le fluide 22 de marquage peut consister par exemple en une peinture lavable de viscosité choisie suivant les différents paramètres énumérés ci-dessus. Cependant tout autre type de fluide pourrait convenir comme une encre lavable par exemple.

Le fluide 22 de marquage selon une forme de réalisation particulière peut présenter des propriétés de luminescence permettant de révéler l'impact dans l'obscurité.

### Le système fonctionne de la manière suivante :

Comme le montre la figure 2, lorsque le véhicule 2 entre en collision avec une surface et par exemple lorsqu'un véhicule 2 de support au sol entre en collision avec le fuselage 48 d'un aéronef, si la collision est d'une intensité susceptible de provoquer des dégâts sur le fuselage 48 de l'aéronef, les moyens 28 de fermeture des cellules 20 libèrent l'ouverture 26.

Dans le cas des lèvres 30, 32 intégrées à la partie 6 élastique et représentées sur les figures 4 à 6, les lèvres 30, 32 sont poussées vers l'intérieur de la cellule les éloignant l'une de l'autre : les lèvres 30, 32 ne se trouvant plus en butée l'une contre l'autre, elles libèrent ainsi l'ouverture 26 et le fluide 22 de marquage s'évacuent en passant par l'ouverture 26 pour se répandre sur la surface contre laquelle le véhicule est entré en collision.

Dans le cas du lien sécable représenté sur la figure 7, du fait de l'intensité de la collision, le lien 38 rompt et libère l'ouverture 26 au travers de laquelle le fluide de marquage se déverse sur la surface contre laquelle le véhicule est entré en collision.

Le fluide 22 de marquage présente des propriétés telles qu'il laisse une trace 50 visible sur la surface en question. Lorsque le véhicule s'éloigne de ladite surface (figure 3), la surface est marquée et l'impact est ainsi visible à l'œil. La zone impactée est délimitée et il peut être vérifié très rapidement si la surface a été endommagée. Le fluide peut ensuite être retiré de la surface pour permettre son traitement ou pour remettre dans l'exemple illustré l'aéronef en service immédiatement dans le cas où il n'y aurait aucun dégât constaté.

La structure du fuselage peut être endommagée et déformée localement : il est nécessaire d'effectuer une réparation localement et la zone impactée est localisée rapidement.

Du fait d'avoir vidé au moins une partie des cellules avec l'impact, le pare-chocs est facilement remis en état en remplaçant la partie élastique. Dans l'exemple illustré, il suffit de séparer par dévissage la partie 6 élastique de la partie 8 structurelle et de la remplacer par une partie 6 élastique neuve et prête à l'emploi. Ainsi, la remise en état du pare-chocs est facile et rapide.

## Revendications

1. Pare-chocs (4) de véhicule (2) comportant au moins une partie (6) en matériau élastique présentant une portion frontale (14) intégrant au moins une cellule (20) de fluide (22) de marquage prévue à l'intérieur de ladite partie (6) en matériau élastique, l'au moins une cellule (20) de fluide (22) de marquage présentant une ouverture (26) directe vers l'extérieur fermée par des moyens (28) de fermeture susceptibles sous l'effet d'une pression appliquée de libérer l'ouverture (26) offrant au fluide de marquage un accès à l'extérieur de la cellule au travers de laquelle il peut s'écouler et en ce qu'il comporte également des moyens (12) de fixation destinés à la fixation audit véhicule (2).

2. Pare-chocs selon la revendication 1, **caractérisé en ce que** les moyens (28) de fermeture se présentent sous la forme de deux lèvres (30, 32) élastiques superposées l'une à l'autre et bloquées en position contrainte en butée l'une contre l'autre, une pression appliquée sur le pare-chocs au niveau des lèvres d'une intensité minimum déterminée assurant le déblocage permettant aux lèvres de retrouver une position naturelle dans laquelle l'ouverture (26) de la cellule vers l'extérieur est libérée.

3. Pare-chocs selon la revendication 1, **caractérisé en ce que** les moyens (28) de fermeture se présentent sous la forme d'un lien sécable rapporté assurant la fermeture de la cellule (20), une pression appliquée sur le lien d'une intensité minimum déterminée conduisant à sa rupture et à la libération de l'ouverture (26) de la cellule vers l'extérieur.

4. Pare-chocs selon l'une des revendications 1 à 3, **caractérisé en ce que** les cellules sont réparties de manière transversale sur au moins une partie de la largeur du pare-chocs.

5. Pare-chocs selon l'une des revendications 1 à 4, **caractérisé en ce que** pour au moins une partie des cellules (20), chaque cellule s'étend transversalement sur au moins une partie de la largeur du pare-chocs.

6. Pare-chocs selon la revendication 5, **caractérisé en ce que** les cellules s'étendant transversalement sont de forme globalement cylindrique.

7. Pare-chocs selon l'une des revendications 1 à 6, **caractérisé en ce que** des cellules (20) sont positionnées à plusieurs niveaux en hauteur.

8. Pare-chocs selon l'une des revendications 1 à 7, **caractérisé en ce que** le pare-chocs comprend une partie (8) non élastique structurelle fixée à la partie (6) élastique et comprenant les moyens (12) de fixation audit véhicule.

9. Véhicule muni d'un pare-chocs selon l'une des revendications 1 à 8, la partie (6) élastique étant positionnée au moins partiellement en partie périphérique externe.

10. Procédé de marquage d'une surface avec laquelle un véhicule (2) selon la revendication 9 entre en collision **caractérisé en ce que** lors du choc, la partie frontale du pare-chocs (4) exerce une pression sur la ou lesdites cellules (20) permettant l'écoulement du fluide (22) de marquage au travers de la ou des ouvertures (26) libérées vers l'extérieur.

## Patentansprüche

1. Stoßfänger (4) eines Fahrzeugs (2), der mindestens einen Teil (6) aus elastischem Material aufweist, der einen frontalen Bereich (14) darstellt, der mindestens eine Zelle (20) mit Markierungsflüssigkeit (22) beinhaltet, die im Inneren des Teils (6) aus elastischem Material vorgesehen ist,
wobei die mindestens eine Zelle (20) mit Markierungsflüssigkeit (22) eine direkte Öffnung (26) nach außen aufweist, die durch Mittel zum Schließen (28) geschlossen ist, die dazu geeignet sind, unter Einwirkung eines ausgeübten Drucks die Öffnung (26) freizugeben, die der Markierungsflüssigkeit einen Zugang zum Bereich außerhalb der Zelle ermöglicht und durch die sie fließen kann, und in der Art, dass er darüber hinaus Mittel zum Befestigen (12) aufweist, die zur Befestigung an dem Fahrzeug (2) dienen.

2. Stoßfänger nach Anspruch 1, **dadurch gekennzeichnet, dass** die Mittel zum Schließen (28) in Form von zwei übereinanderliegenden elastischen Lippen (30, 32) vorliegen, die in der zwangsmäßigen Position, wobei die eine an der anderen anliegt, gesperrt sind, wobei ein auf den Stoßfänger in Höhe der Lippen mit einer bestimmten Mindestintensität ausgeübter Druck das Entsperren sicherstellt und es damit den Lippen ermöglicht, eine natürliche Position wiederzufinden, in der die Öffnung (26) der Zelle nach außen freigegeben ist.

3. Stoßfänger nach Anspruch 1, **dadurch gekennzeichnet, dass** die Mittel zum Schließen (28) in Form einer aufgebrachten trennbaren Verbindung vorliegen, die das Schließen der Zelle (20) sicherstellt, wobei ein auf die Verbindung mit einer bestimmten Mindestintensität ausgeübter Druck zu ihrer Trennung führt und damit zur Freigabe der Öffnung (26) der Zelle nach außen.

4. Stoßfänger nach einem der Ansprüche 1 bis 3, **dadurch gekennzeichnet, dass** die Zellen quer über mindestens einen Teil der Breite des Stoßfängers verteilt sind.

5. Stoßfänger nach einem der Ansprüche 1 bis 4, **dadurch gekennzeichnet, dass** sich für mindestens einen Teil der Zellen (20) jede Zelle quer über mindestens einen Teil der Breite des Stoßfängers erstreckt.

6. Stoßfänger nach Anspruch 5, **dadurch gekennzeichnet, dass** die sich quer erstreckenden Zellen insgesamt eine zylindrische Form haben.

7. Stoßfänger nach einem der Ansprüche 1 bis 6, **dadurch gekennzeichnet, dass** die Zellen (20) auf mehreren Höhenebenen positioniert sind.

8. Stoßfänger nach einem der Ansprüche 1 bis 7, **dadurch gekennzeichnet, dass** der Stoßfänger einen nicht elastischen strukturellen Teil (8) aufweist, der an dem elastischen Teil (6) befestigt ist und die Mittel zum Befestigen (12) an dem Fahrzeug aufweist.

9. Fahrzeug, versehen mit einem Stoßfänger nach einem der Ansprüche 1 bis 8, wobei der elastische Teil (6) zumindest teilweise im äußeren Umfangsteil positioniert ist.

10. Verfahren zum Markieren einer Oberfläche, mit der ein Fahrzeug (2) nach Anspruch 9 kollidiert, **dadurch gekennzeichnet, dass** während des Aufpralls der vordere Teil des Stoßfängers (4) Druck auf die Zelle oder die Zellen (20) ausübt und damit das Fließen der Markierungsflüssigkeit (22) durch die nach außen freigegebene(n) Öffnung(en) (26) ermöglicht.

## Claims

1. Bumper (4) of a vehicle (2) comprising at least a part (6) made of an elastic material having a front-end portion (14) incorporating at least one cell (20) of marking fluid (22) provided inside said part (6) made of elastic material, the at least one cell (20) of marking fluid (22) having a direct outward aperture (26) closed by closure means (28) that can, under the effect of an applied pressure, free the aperture (26) offering the marking fluid access to the outside of the cell through which it can flow and in that it also comprises fixing means (12) intended for the fixing to said vehicle (2).

2. Bumper according to Claim 1, **characterized in that** the closure means (28) take the form of two elastic lips (30, 32) superposed on one another and blocked in a stressed position of abutment against one another, a pressure applied on the bumper at the lips of a determined minimum intensity ensuring the unblocking to allow the lips to revert to a natural position in which the outward aperture (26) of the cell is freed.

3. Bumper according to Claim 1, **characterized in that** the closure means (28) take the form of an added divisible link ensuring the closure of the cell (20), a pressure applied to the link of a determined minimum intensity causing it to break and free the outward aperture (26) of the cell.

4. Bumper according to one of Claims 1 to 3, **characterized in that** the cells are distributed transversely over at least a part of the width of the bumper.

5. Bumper according to one of Claims 1 to 4, **characterized in that**, for at least a part of the cells (20), each cell extends transversely over at least a part of the width of the bumper.

6. Bumper according to Claim 5, **characterized in that** the cells extending transversely are of overall cylindrical form.

7. Bumper according to one of Claims 1 to 6, **characterized in that** cells (20) are positioned at several levels heightwise.

8. Bumper according to one of Claims 1 to 7, **characterized in that** the bumper comprises a structural non-elastic part (8) fixed to the elastic part (6) and comprising the means (12) for fixing to said vehicle.

9. Vehicle provided with a bumper according to one of Claims 1 to 8, the elastic part (6) being positioned at least partially in an outer peripheral part.

10. Method for marking a surface with which a vehicle (2) according to Claim 9 comes into collision, **characterized in that**, upon the impact, the front-end part of the bumper (4) exerts a pressure on said cell or cells (20) allowing marking fluid (22) to flow through the freed outward aperture or apertures (26).
